(19) Europäisches Patentamt / European Patent Office / Office européen des brevets

(11) **EP 3 675 500 A1**

(12) **EUROPEAN PATENT APPLICATION**

(43) Date of publication:
01.07.2020 Bulletin 2020/27

(51) Int Cl.:
*H04N 19/593* (2014.01)     *H04N 19/463* (2014.01)
*H04N 19/124* (2014.01)     *H04N 19/96* (2014.01)

(21) Application number: 18306839.4

(22) Date of filing: 24.12.2018

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital VC Holdings, Inc.
Wilmington, DE 19809 (US)**

(72) Inventors:
• **CHEN, Ya**
  **35576 Cesson-Sévigné Cedex (FR)**
• **DE LAGRANGE, Philippe**
  **35576 Cesson-Sévigné Cedex (FR)**
• **BORDES, Philippe**
  **35576 Cesson-Sévigné Cedex (FR)**

(74) Representative: **Huchet, Anne
InterDigital CE Patent Holdings
20, rue Rouget de Lisle
92130 Issy-les-Moulineaux (FR)**

(54) **QUANTIZATION PARAMETER PREDICTION IN VIDEO ENCODING AND DECODING**

(57)     To encode or decode a quantization parameter (QP) for a current block, a QP predictor may be generated, based on one or more quantization parameters of neighboring blocks of the current block. To select neighboring blocks, a position may be selected within the current block. A left (top) neighboring block, which includes a sample that has the same vertical (horizontal) location as the selected position can then be selected. A center position can be used, or multiple positions can be used. The QP predictor for the block may be formed as the left QP, the top QP, or an average of the left and top QPs. The average may be a weighted average, wherein the weights are based on the length of shared borders or surface areas of the neighboring blocks used for predicting the QPs.

**FIG. 11A**

Printed by Jouve, 75001 PARIS (FR)

**Description**

TECHNICAL FIELD

The present embodiments generally relate to a method and an apparatus for video encoding or decoding, and more particularly, to a method and an apparatus for efficiently coding and decoding of quantization parameters.

BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

According to an embodiment, a method of video encoding or decoding is provided, comprising: accessing a center position of a block of a picture; selecting one or more of adjacent blocks, said adjacent blocks including (1) an above adjacent block that includes a sample that is at a same horizontal location as said center position of said block and (2) a left adjacent block that includes a sample that is at a same vertical location as said center position of said block; accessing one or more quantization parameters of said one or more adjacent blocks, each of said one or more quantization parameters corresponding to a respective one of said one or more adjacent blocks; and predicting a quantization parameter for said block based on said one or more quantization parameters.

According to another embodiment, an apparatus of video encoding or decoding is provided, comprising: means for accessing a center position of a block of a picture; means for selecting one or more of adjacent blocks, said adjacent blocks including (1) an above adjacent block that includes a sample that is at a same horizontal location as said center position of said block and (2) a left adjacent block that includes a sample that is at a same vertical location as said center position of said block; means for accessing one or more quantization parameters of said one or more adjacent blocks, each of said one or more quantization parameters corresponding to a respective one of said one or more adjacent blocks; and means for predicting a quantization parameter for said block based on said one or more quantization parameters.

According to another embodiment, an apparatus for video encoding or decoding is presented, comprising one or more processors, wherein said one or more processors are configured to: access a center position of a block of a picture; select one or more of adjacent blocks, said adjacent blocks including (1) an above adjacent block that includes a sample that is at a same horizontal location as said center position of said block and (2) a left adjacent block that includes a sample that is at a same vertical location as said center position of said block; access one or more quantization parameters of said one or more adjacent blocks, each of said one or more quantization parameters corresponding to a respective one of said one or more adjacent blocks; and predict a quantization parameter for said block based on said one or more quantization parameters. The apparatus may further comprise one or more memories coupled to said one or more processors.

According to another embodiment, a signal comprising encoded video is formed by performing: accessing a center position of a block of a picture; selecting one or more of adjacent blocks, said adjacent blocks including (1) an above adjacent block that includes a sample that is at a same horizontal location as said center position of said block and (2) a left adjacent block that includes a sample that is at a same vertical location as said center position of said block; accessing one or more quantization parameters of said one or more adjacent blocks, each of said one or more quantization parameters corresponding to a respective one of said one or more adjacent blocks; and predicting a quantization parameter for said block based on said one or more quantization parameters.

BRIEF DESCRIPTION OF THE DRAWINGS

FIG. 1 illustrates a block diagram of an embodiment of a video encoder.

FIG. 2 illustrates a block diagram of an embodiment of a video decoder.

EP 3 675 500 A1

FIG. 3 is a pictorial example illustrating a QG obtained with a quadtree split-depth of 2.

FIG. 4 is a pictorial example illustrating that "qp_delta" is coded for the first CU having non-zero coefficients.

FIG. 5 is a pictorial example illustrating a CU that belongs to one QG.

FIG. 6 is a pictorial example illustrating that the current QG can be larger than neighboring QGs.

FIGs. 7(a)-(d) illustrate examples of block partitioning using different splitting.

FIGs. 8(a)-(d) illustrate examples of QGs defined with splitting-depth equal to 2, where the same number corresponds to the same QG.

FIG. 9 and FIG. 10 are pictorial examples illustrating QP prediction when the current QG is surrounded by several neighboring QGs.

FIG. 11A and FIG. 11B are pictorial examples illustrating that the list of QPs can be derived from projecting pre-defined positions in the current CU or QG.

FIG. 12 illustrates that the QPs can be stored in two buffers.

FIG. 13A and FIG. 13B illustrate an example of the waverfront-style QP storage.

FIG. 14 illustrates a block diagram of a system within which aspects of the present embodiments may be implemented.

DETAILED DESCRIPTION

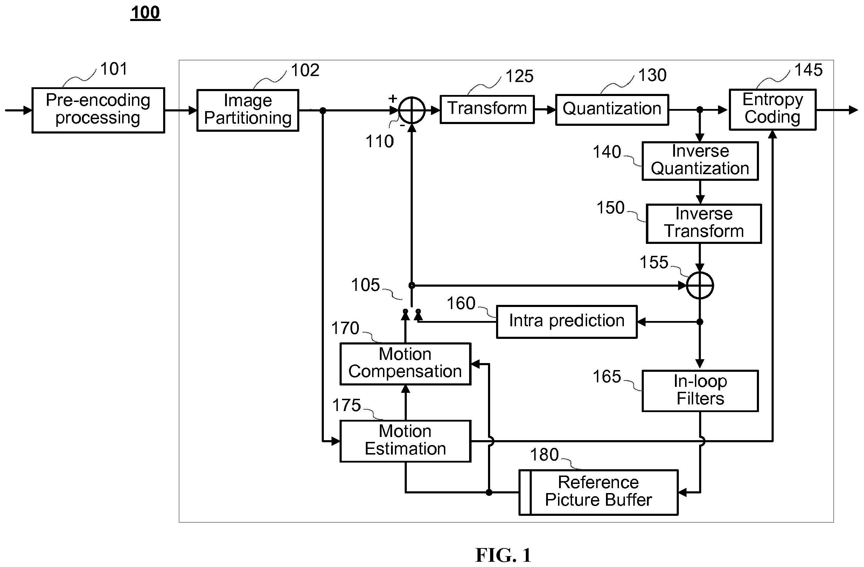

FIG. 1 illustrates an example of a video encoder 100, such as a High Efficiency Video Coding (HEVC) encoder. FIG. 1 may also illustrate an encoder in which improvements are made to the HEVC standard or an encoder employing technologies similar to HEVC, such as a VVC (Versatile Video Coding) encoder under development by JVET (Joint Video Exploration Team).

In the present application, the terms "reconstructed" and "decoded" may be used interchangeably, the terms "encoded" or "coded" may be used interchangeably, and the terms "image", "picture" and "frame" may be used interchangeably. Usually, but not necessarily, the term "reconstructed" is used at the encoder side while "decoded" is used at the decoder side.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In HEVC, to encode a video sequence with one or more pictures, a picture is partitioned (102) into one or more slices where each slice may include one or more slice segments. A slice segment is organized into coding units, prediction units, and transform units. The HEVC specification distinguishes between "blocks" and "units," where a "block" addresses a specific area in a sample array (e.g., luma, Y), and the "unit" includes the collocated blocks of all encoded color components (e.g., Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" may be used to refer, for example, to any of CTU, CU, PU, TU, CB, PB, and TB. In addition, the "block" may also be used to refer to a macroblock and a partition as specified in H.264/AVC or other video coding standards, and more generally to refer to an array of data of various sizes.

In the encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

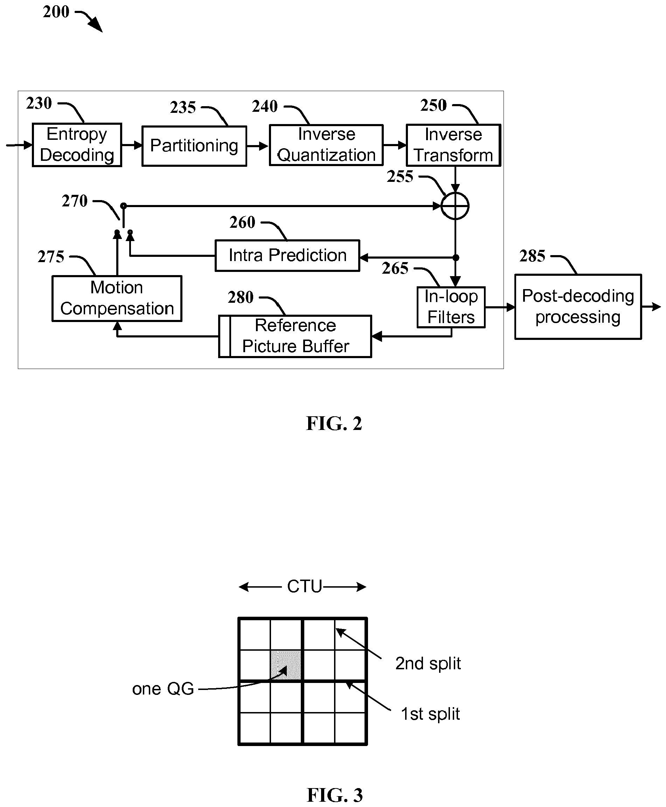

FIG. 2 illustrates a block diagram of an example of a video decoder 200, such as an HEVC decoder. In the decoder 200, a bitstream is decoded by the decoder elements as described below. Video decoder 200 generally performs a decoding pass reciprocal to the encoding pass as described in FIG. 1, which performs video decoding as part of encoding video data. FIG. 2 may also illustrate a decoder in which improvements are made to the HEVC standard or a decoder employing technologies similar to HEVC, such as a VVC decoder.

In particular, the input of the decoder includes a video bitstream, which may be generated by video encoder 100. The bitstream is first entropy decoded (230) to obtain transform coefficients, motion vectors, picture partitioning information, and other coded information. The picture partitioning information indicates the size of the CTUs, and a manner a CTU is split into CUs, and possibly into PUs when applicable. The decoder may therefore divide (235) the picture into CTUs, and each CTU into CUs, according to the decoded picture partitioning information. The transform coefficients are de-quantized (240) and inverse transformed (250) to decode the prediction residuals.

Combining (255) the decoded prediction residuals and the predicted block, an image block is reconstructed. The predicted block may be obtained (270) from intra prediction (260) or motion-compensated prediction (i.e., inter prediction) (275). In case of bi-prediction, two motion compensated predictions may be combined with a weighted sum. In-loop filters (265) are applied to the reconstructed image. The filtered image is stored at a reference picture buffer (280).

The decoded picture can further go through post-decoding processing (285), for example, an inverse color transform (e.g., conversion from YCbCr 4:2:0 to RGB 4:4:4) or an inverse remapping performing the inverse of the remapping process performed in the pre-encoding processing (101). The post-decoding processing may use metadata derived in the pre-encoding processing and signaled in the bitstream.

As described above, quantization and de-quantization are used in video encoding and decoding. Typically, quantization may be performed by dividing a coefficient by a specific quantization scale (Qstep), and de-quantization may be performed by multiplying a coefficient by the quantization scale. In general, a pre-defined or transmitted table allows converting a QP index into a corresponding Qstep, and only the QP index is coded in the bitstream.

The quantization scale Qstep can be locally adjusted by specifying an offset from the quantization parameter (QP) of the current picture or slice (QPslice). This local QP offset can be specified, for example, for each coding block (AVC), or group of coding blocks (quantization group QG in HEVC). In HEVC, the QG size is determined with a maximum split depth.

To save bits, the local QP offset is set in a differential way: a QP predictor is typically computed, then the difference between the predictor and actual QP, qp_delta, is computed and transmitted. For HEVC, the QP predictor is the QP average of left and top neighboring blocks when available.

This application proposes an improvement over the HEVC QP prediction, which may translate into bit savings without increasing complexity. In the following, we first review the QP prediction in HEVC, then we describe our proposed techniques.

**HEVC QP Prediction**

In HEVC, syntax element "diff_cu_qp_delta_depth" specifies the difference between the luma coding tree block size and the minimum luma coding block size of coding units that convey cu_qp_delta_abs and cu_qp_delta_sign_flag. That is, syntax element "diff_cu_qp_delta_depth" is a quadtree split-depth that allows deriving the size of the smallest area inside a coding tree block that shares the same QP value. Such an area is called Quantization Group (QG), where a QG defines a single QP prediction for the whole QG and an area where at most one qp_delta may be coded. In an HEVC bitstream, the CTU defines the maximal square CU and the quadtree split-depth is the number of successive quadtree splits to obtain the QG square size from the CTU, as illustrated in an example in FIG. 3.

For all the CUs in one QG, the QP is computed as:

$$QP = QPpred + qp\_delta \qquad\qquad (eq. 1)$$

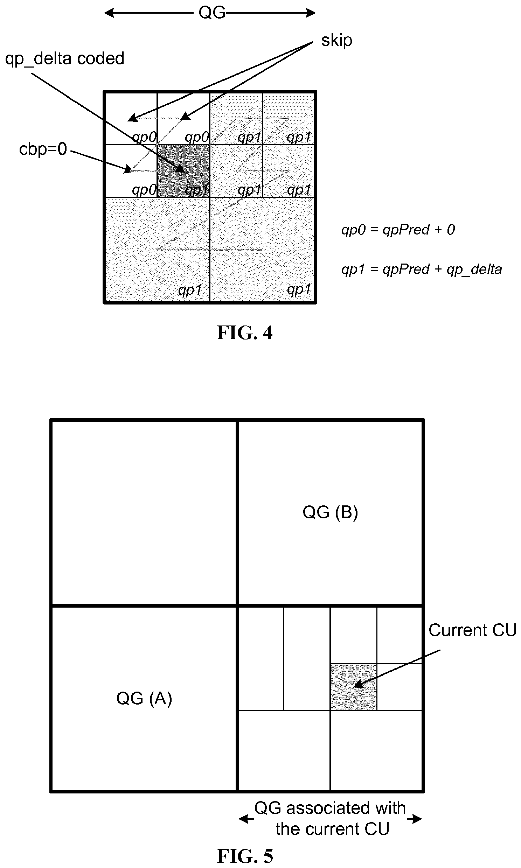

where "qp_delta" is encoded for the first CU in the QG which has non-zero coefficients (e.g. non-skip), as illustrated in an example in FIG. 4. At the encoder side, after QPpred is obtained, the difference qp_delta may be encoded. At the decoder side, qp_delta may be decoded from the bitstream, then qp_delta may be added to QPpred to obtain the QP for the current block. Before being encoded, "qp_delta" is inferred to be zero in the current QG. Consequently, some CUs inside the same QG may have different QPs as shown in FIG. 4. The QP parameter may be used for other purposes than coefficient quantization, such as deriving the deblocking filter strength.

If a QG is the first quantization group in a slice or a tile, "QPpred" is equal to the basis QP of the current slice (QPslice). In other cases, HEVC defines QPA and QPB, as illustrated in an example in FIG. 5, as the QP values associated with the left (A) and above (B) CUs (neighbors at the top-left sample of the current QG) respectively, and QPpred is computed as (equal "=" means closest smaller integer):

$$QPpred = (QPA + QPB + 1) / 2 \qquad\qquad (eq. 2)$$

where:

- QPA is the value of the QP of the CU on the left of the current QG. If not available, QPA is set to the QP of the previously coded/decoded CU.

- QPB is the value of the QP of the CU above the current QG. If not available, QPB is set to the QP of the previously coded/decoded CU.

In the following, in the equations with "QPpred" expression as (eq. 2), the symbol "=" means closest smaller integer. The rationale of this derivation of "QPpred" is that the quantization step is generally spatially correlated with the neighboring regions, since they are likely to share same signal characteristics (texture, coding modes, etc.).

In the example as shown in FIG. 4, the first three CUs in the scanning order do not have any coded coefficients, then "qp_delta" is not coded and inferred to be zero, namely, the QP of these three CUs is qp0 = QPpred. The fourth CU has "qp_delta" which is coded and the QP for the subsequent CUs is equal to qp1 = QPpred + qp_delta.

Also, in HEVC, when the neighboring QG sizes are smaller than the current QG size, it may happen that the neighbors are representative of the top-left corner only, and they may not be good predictors for the current QG.

**Improved QP Prediction**

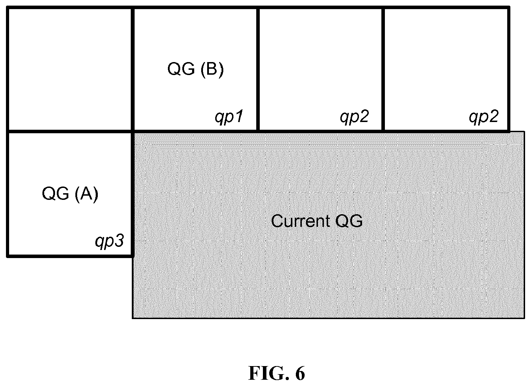

In the example of FIG. 6, the QP predictor for the current QG is QPpred = (QPA + QPB + 1)/2 = (qp1 + qp3) / 2, whereas a better predictor would have been, for example, QPpred = (qp2 + qp3) / 2 because the majority of QGs sharing frontier with the current QG have QP value equal to qp2.

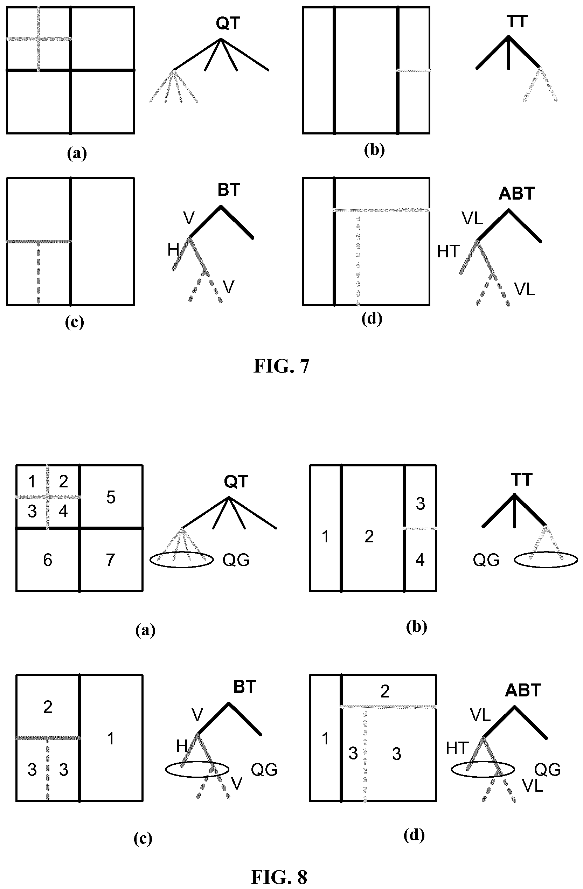

In new video codecs, the partitioning has been expanded so that the CUs may have greater size than those used in previous codec generations and have more variations in sizes and shapes, as illustrated in examples in FIG. 7. For example, in JVET, the VVC reference software allows quadtree splitting (QT), binary-tree splitting (BT) or triple-tree splitting (TT), as described in an article by J. Chen, Y. Ye and S. Kim, "Algorithm description for Versatile Video Coding and Test Model 2 (VTM 2)," JVET-K1002, 11th Meeting: Ljubljana, SI, 10-18 July 2018. In addition, Asymmetric Binary-Tree (ABT) has been proposed in an article by Y.W. Chen et al., "Description of SDR, HDR and 360° video coding technology proposal by Qualcomm and Technicolor - low and high complexity versions," JVET-J0021, 10th Meeting: San Diego, US, 10-20 Apr. 2018.

For VVC which supports higher flexibility in partitioning and hence supports various block shapes, the definition of the QG that represents the "qp_delta" coding granularity has not been finalized. If the QG is defined as corresponding to a pre-determined splitting depth, this may lead to QG with various sizes and shapes as depicted in FIG. 8, where the QGs correspond to splitting depth equal to 2. In FIG. 8, the same number in each sub-figure corresponds to the same quantization group. For example, in FIG. 8(c), there are two partitions with number "3", and both of them belong to the same quantization group QG3.

To better utilize the rationale of the QP predictor derivation as described before, this disclosure proposes to define new rules for deriving the QP predictor. The proposed methods take into account the various QG shapes and sizes of the new generation codecs.

As described above, the Quantization Group (QG) may have different sizes and shapes in the current picture. For example, this is the case when the QG is defined with the pre-determined splitting depth. This is also the case if a QG is set equal to a CU as CUs have different sizes/shapes.

In the following, we describe how the value of "QPpred" is derived for one QG, with neighboring QGs being considered. The QP for a QG may be set to a dominant QP, an average QP on the border, or the QP of a particular CU in the QG, for example, the CU at the bottom-right corner along the border, or the CU at the final scanning position. The principles may also apply to the derivation of the value of "QPpred" for a CU, with QP being predicted from neighboring QGs or CUs. More generally, the QP prediction methods can be applied to other partitioning units or block levels for the current block and neighboring blocks.

**Embodiment 1**

The QP predictor associated with the current QG (i.e., value of "QPpred") is derived as a function of the shared border with the previously reconstructed neighboring (or adjacent) QGs (e.g., above and/or left). A QG is considered as a left adjacent QG if it shares boundary (partially or completely) with the current QG on the left, and a QG is considered as a top (above) adjacent QG if it shares boundary (partially or completely) with the current QG on the top.

**1a)** For example, we can re-use (eq. 2) with:

QPA = QP associated with the left adjacent QG which has the longest common border (or common height) with the current CG.
QPB = QP associated with the above adjacent QG which has the longest common border (or common width) with the current QG.

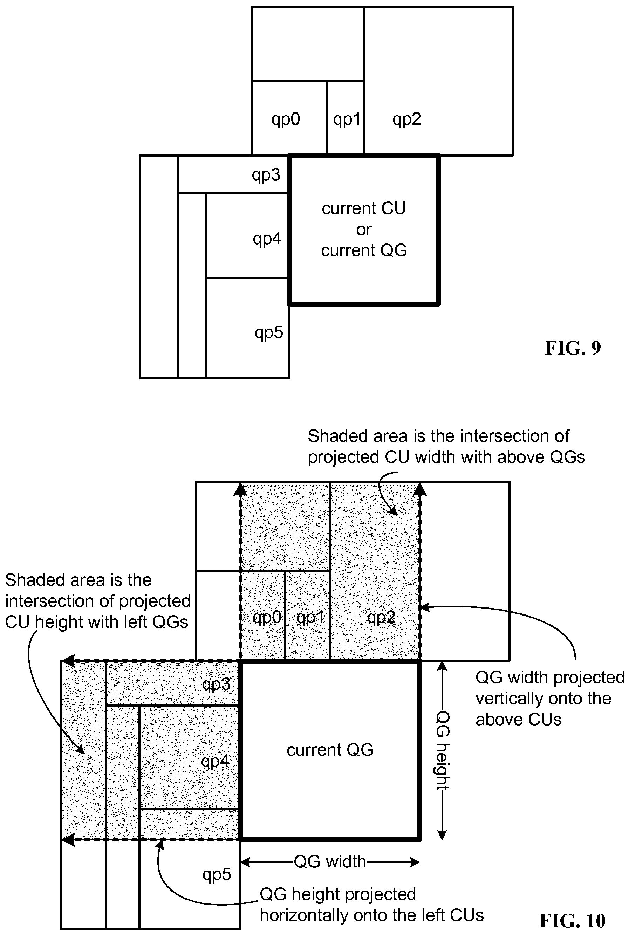

In the example as shown in FIG. 9, for the current QG the value of QPpred is (qp2 + qp4) /2. The block with text qp0, qp1, ... is a QG, which can be denoted as QG(qp0), QG(qp1), ..., respectively.

Alternatively, the value of "QPpred" can be computed as:
QPpred = QP associated with the left or above QG with greatest shared frontier length. In the example as shown in FIG. 9, QPpred = qp4.

In case the greatest shared boundary length is equal to L and several neighbor QGs have shared boundary length equal to L, then the QP may be calculated the average of all these QPs having shared boundary length equal to L.

In another example, all these QPs can be ordered in a pre-defined scanning path (e.g., from top-left to bottom-left and above-left to above-right) and the value of "QPpred" is set equal to the first QP in this ordered list of QPs. In another variant, all the QPs of the lists are averaged. In another variant, the first N QPs of the lists are averaged, with N equal to 2 for example.

**1b)** In another example, one can re-use (eq.2) with:

QPA = weighted sum of left QPs, where the weights are function of the length of the shared border (vertical).
QPB = weighted sum of above QPs, where the weights are function of the length of the shared border (horizontal).

In the example as shown in FIG. 9, for the current QG the value of QPpred is (qp0 + qp1 +2.25*qp2 + qp3 + 2*qp4 + qp5) / 8.25, where a weight is linearly proportional to the length of the shared border. In a variant, the shared length is replaced by the full length of the neighboring QG.

**1c)** In another example, one can re-use (eq. 2) with:

QPA = QP associated with the left QG with greatest surface area (width * height in case of rectangular QGs).
QPB = QP associated with the above QG with greatest surface area.

In the example as illustrated in FIG. 9, for the current QG the value of QPpred is (qp2 + qp5) / 2. In another example, "QPpred" can be computed as a weighted sum, where the weights are proportional to the QG surface areas. The surface area can be computed as the intersection with the vertical (or horizontal) projection of the current QG width (or height) as depicted in FIG. 10. In this example, the surface area for QG(qp2) is calculated as the product of (1) the shared length between the current QG and QG(qp2) and (2) the height of QG(qp2). The surface area for QG(qp0) is calculated as the product of (1) the shared length between the current QG and QG(qp0) and (2) the height of QG(qp0). The surface area for QG(qp5) is calculated as the product of (1) the shared length between the current QG and QG(qp5) and (2) the width of QG(qp5). The calculation for QG(qp1), QG(qp3) and QG(qp4) is the surface area of the QG itself.

## Embodiment 2

Some implementations can be deduced from previous embodiments, where the process of scanning neighboring QGs, above and/or left, for collecting the list of QPs, is modified. These implementations relate in defining pre-defined positions in the current QG and uses these positions to build the list of neighboring QGs.

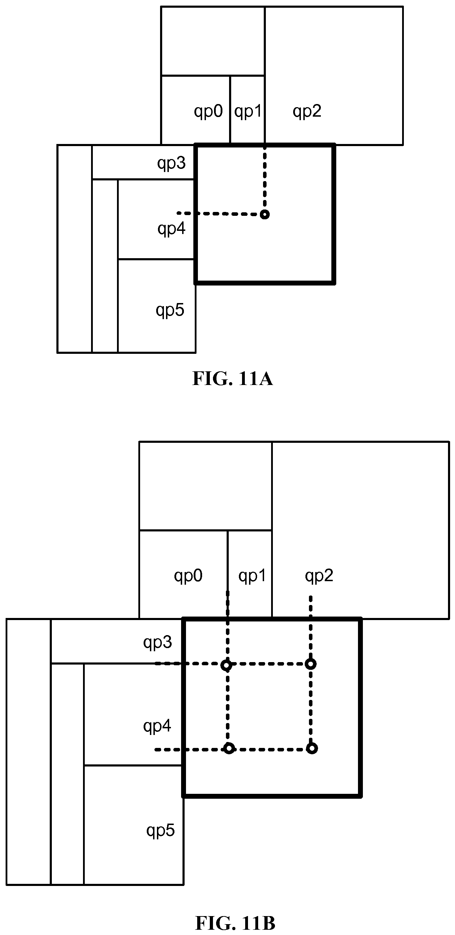

For example, one pre-defined position can be defined to be the center sample in the current QG. Then the list of neighboring QG(s) is defined as the intersection of the above (and/or left) QGs with vertical (and/or horizontal) line going through the center point as depicted in FIG. 11A. In this example, the list of neighboring QPs values will be { qp1, qp2, qp4 } or {qp1 or qp2, qp4 }. Note in FIG. 11A, the vertical line passing the center of the current QG falls between samples from QG(qp1) and QG(qp2) (i.e., each of QG(qp1) and QG(qp2) contains a sample whose horizontal distance from the pre-defined position is smaller than one sample), and the QP value of one or both of QG(qp1) and QG(qp2) can be included in the list.

In another example, a set of pre-defined positions inside the current QG can be defined to be { (1/4w;1/4h), (3/4w;1/4h), (1/4w;3/4h), (3/4w;3/4h) } as depicted in FIG. 11B, where w and h are the width and height of the current QG. In this example, the list of neighboring QPs values will be {qp0, qp1, qp2, qp3, qp4 } or {qp0 or qp1, qp2, qp3 or qp4 } .

Next, this list can be used to derive "QPpred" using the same method as described before (e.g., average or weighted average, longest common border...). That is, the neighboring blocks are selected based on whether a block shares boundary with the current block, or the neighboring blocks are selected further based on the pre-defined positions. Among these initially selected neighboring blocks, we can perform the methods as described above. For example, a left block that has the longest common border may be selected and its associated QP can be used as the QP predictor for the current block.

In a specific example, the pre-defined center position is set to (x0 + w/2, y0 + h/2) (maybe slightly off-center), with (x0, y0) the coordinates of the top-left sample of the current QG and (w,h) the width and height of the current QG. This way the projected line cannot fall between two samples (assuming w and h are even numbers) and only one left neighbors and one above neighbor are selected.

To implement this specific example into VVC, the changes that may be made to the current VVC draft (see B. Bross, J. Chen, S. Liu, "Versatile Video Coding (Draft 3)", JVET-L1001, Macao, CN, October 2018, version 3 of the document) as listed below:

First, the quantization group size is saved along with its position. Changes (underlined) are made in coding_quadtree and multi_type_tree.

| coding_quadtree( x0, y0, log2CbSize, cqtDepth, treeType ) { | Descriptor |
|---|---|
| minQtSize = ( treeType = = DUAL_TREE_CHROMA ) ? MinQtSizeC : MinQtSizeY | |
| maxBtSize = ( treeType = = DUAL_TREE_CHROMA ) ? MaxBtSizeC : MaxBtSizeY | |
| if( ( ( ( x0 + ( 1 << log2CbSize ) <= pic_width_in_luma_samples ) ? 1 : 0 ) + ( ( y0 + ( 1 << log2CbSize ) <= pic_height_in_luma_samples ) ? 1 : 0 ) + ( ( ( 1 << log2CbSize ) <= maxBtSize ) ? 1 : 0 ) ) >= 2 && ( 1 << log2CbSize ) > minQtSize ) | |
| **qt_split_cu_flag**[ x0 ][ y0 ] | ae(v) |
| if( cu_qp_delta_enabled_flag && cqtDepth <= diff_cu_qp_delta_depth ) { | |
| IsCuQpDeltaCoded = 0 | |
| CuQpDeltaVal = 0 | |
| CuQgTopLeftX = x0 | |
| CuQgTopLeftY = y0 | |
| CuQgWidth = 1 << log2CbSize | |
| CuQgHeight = 1 << log2CbSize | |
| } | |
| [...] | |
| } | |

| multi_type_tree( x0, y0, cbWidth, cbHeight, cqtDepth, mttDepth, depthOffset, partIdx, treeType ) { | Descriptor |
|---|---|
| if( ( allowSplitBtVer \|\| allowSplitBtHor \|\| allowSplitTtVer \|\| allowSplitTtHor ) && ( x0 + cbWidth <= pic_width_in_luma_samples ) && (y0 + cbHeight <= pic_height_in_luma_samples ) ) | |
| **mtt_split_cu_flag** | ae(v) |
| if( cu_qp_delta_enabled_flag && ( cqtDepth + mttDepth ) <= diff_cu_qp_delta_depth ) { | |
| IsCuQpDeltaCoded = 0 | |
| CuQpDeltaVal = 0 | |
| CuQgTopLeftX = x0 | |
| CuQgTopLeftY = y0 | |
| CuQgWidth = cbWidth | |
| CuQgHeight = cbHeight | |
| } | |
| if( mtt_split_cu_flag ) { | |

Then, neighboring A and B blocks are selected as follows (in "derivation process for quantization parameters"), where modifications are highlighted (underlines for additions and strikethroughs for deletions):

[...]
In this process, the luma quantization parameter $Qp'_Y$ and the chroma quantization parameters $Qp'_{Cb}$ and $Qp'_{Cr}$ are derived.

The luma location (xQg, yQg), specifies the top-left luma sample of the current quantization group relative to the top left luma sample of the current picture. The horizontal and vertical positions xQg and yQg are set equal to CuQgTopLeftX and CuQgTopLeftY, respectively. The luma rectangular size (wQg, hQg), specifies the size of the current quantization group. The horizontal and vertical sizes wQg and yQg are set equal to CuQgWidth and Cu-QgHeight, respectively.

[...]

2. The availability derivation process for a block as specified in clause 6.4.X [Ed. (BB): Neighbouring blocks availability checking process tbd] is invoked with the location (xCurr, yCurr) set equal to (xCb, yCb) and the neighbouring location (xNbY, yNbY) set equal to (xQg - 1, yQg + hQg/2) as inputs, and the output is assigned to availableA. The variable $qP_{Y\_A}$ is derived as follows:

- If one or more of the following conditions are true, $qP_{Y\_A}$ is set equal to $qP_{Y\_PREV}$:
- availableA is equal to FALSE.
- the CTB address ctbAddrA of the CTB containing the luma coding block covering the luma location (xQg - 1, yQg + hQg/2) is not equal to CtbAddrInTs, where ctbAddrA is derived as follows:

$$xTmp = ( xQg - 1 ) >> MinTbLog2SizeY$$

$$yTmp = ( yQg + hQg / 2 ) >> MinTbLog2SizeY$$

$$minTbAddrA = MinTbAddrZs[ xTmp ][ yTmp ]$$

$$ctbAddrA = minTbAddrA >> ( 2 * ( CtbLog2SizeY - MinTbLog2SizeY ) ) \qquad (8\text{-}467)$$

- Otherwise, $qP_{Y\_A}$ is set equal to the luma quantization parameter $Qp_Y$ of the coding unit containing the luma coding block covering (xQg - 1, yQg + hQg / 2).

3. The availability derivation process for a block as specified in clause 6.4.X [Ed. (BB): Neighbouring blocks availability checking process tbd] is invoked with the location (xCurr, yCurr) set equal to (xCb, yCb) and the neighbouring location (xNbY, yNbY) set equal to (xQg + wQg / 2, yQg - 1) as inputs, and the output is assigned to availableB. The variable $qP_{Y\_B}$ is derived as follows:

- If one or more of the following conditions are true, $qP_{Y\_B}$ is set equal to $qP_{Y\_PREV}$:
- availableB is equal to FALSE.
- the CTB address ctbAddrB of the CTB containing the luma coding block covering the luma location (xQg + wQg / 2, yQg - 1) is not equal to CtbAddrInTs, where ctbAddrB is derived as follows:

$$xTmp = (\, xQg + wQg / 2\,) \;>>\; MinTbLog2SizeY$$

$$yTmp = (\, yQg - 1\,) \;>>\; MinTbLog2SizeY$$

$$minTbAddrB = MinTbAddrZs[\, xTmp\,][\, yTmp\,]$$

$$ctbAddrB = minTbAddrB \;>>\; (\,2 * (\, CtbLog2SizeY - MinTbLog2SizeY\,)\,) \qquad (8\text{-}468)$$

- Otherwise, $qP_{Y\_B}$ is set equal to the luma quantization parameter $Qp_Y$ of the coding unit containing the luma coding block covering (xQg + wQg / 2, yQg - 1).

**Embodiment 3**

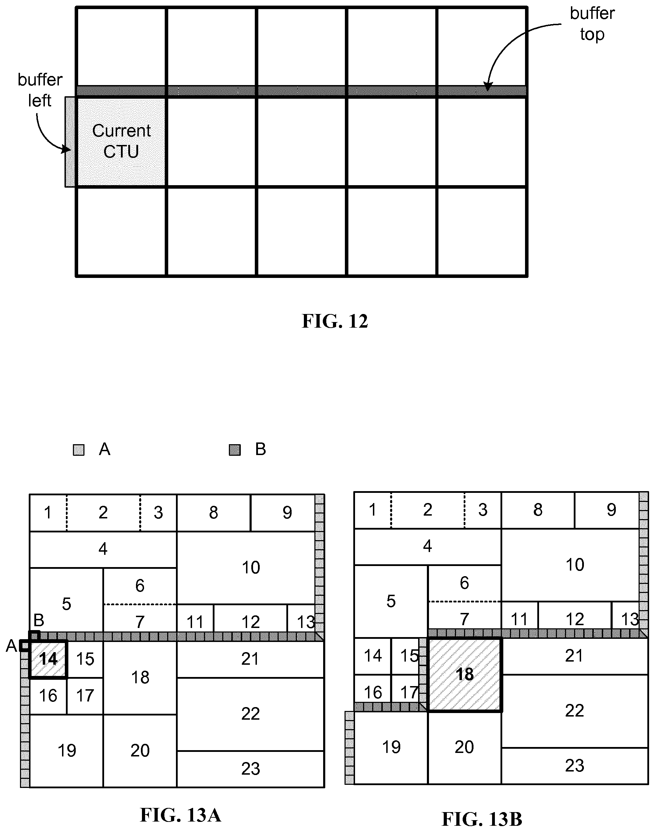

In one embodiment, the QPs associated with the QGs are stored in two separate buffers (labelled as buffer-top and buffer-left) as shown in an example in FIG. 12, containing the QPs of the above and left QGs respectively. Storing the QPs in the buffer can improve the speed and it can also help in controlling memory bandwidth. The size of these buffers is equal to the picture width and CTU-height respectively, divided by the smallest CU size (e.g., 4).

As shown in the example in FIG. 12, the QPs of the CUs located at the bottom of each CTUs are stored in a buffer labelled as "buffer-top". Then, subsequent QGs of the next CTU line can access the QP of the above QGs by reading in this "buffer-top". Similarly, the QPs are stored in a buffer labelled as "buffer-left" of size one CTU-height so that subsequent QGs can access the QP of the left QGs by reading in this "buffer-left".

To reduce the memory bandwidth and the inter CTU-line dependency, one can restrain access to QPs of CUs outside the current CTU. Then the size of the buffer-top is CTU-width and the derivation of the "QPred" is modified as follows:

- If A and B are inside the current CTU, the QPpred = (QPA + QPB) / 2.
- Else if A is outside the current CTU and B is inside the current CTU, then QPpred = QPB.
- Else if A is inside the current CTU and B is outside the current CTU, then QPpred = QPA.
- Otherwise (A and B are outside the current CTU), then QPpred = QPprev, where QPprev = QP of a previous block in the coding order.

In the raster scan CTU order, QPs stored in the "buffer-left" buffer can be leveraged to allow the use of left QG neighbors for QP prediction, even if outside of the CTU (e.g., for block 14 or 19 in FIG. 13A and FIG. 13B), since their QP values are stored in the buffer. The QP prediction process can be modified as follows:

- If A is inside the picture (slice, tile), and B is inside the current CTU, then QPpred = (QPA + QPB) / 2.
- Else if A is outside the current picture (slice, tile), and B is inside the current CTU, then QPpred = QPB.
- Else if A is inside the current picture (slice, tile) and B is outside the current CTU, then QPpred = QPA.
- Otherwise (A is outside the current picture (slice, tile), and B is outside the current CTU), then QPpred = QPprev.

To remove the restriction to the current CTU for the left neighbor, the following modifications may be made to the current VVC draft:

2. The availability derivation process for a block as specified in clause 6.4.X [Ed. (BB): Neighbouring blocks availability checking process tbd] is invoked with the location (xCurr, yCurr) set equal to (xCb, yCb) and the neighbouring location (xNbY, yNbY) set equal to (xQg - 1, yQg) as inputs, and the output is assigned to availableA. The variable $qP_{Y\_A}$ is derived as follows:

- If one or more of the following conditions are true, $qP_{Y\_A}$ is set equal to $qP_{Y\_PREV}$:

- availableA is equal to FALSE.

- Otherwise, $qP_{Y\_A}$ is set equal to the luma quantization parameter $Qp_Y$ of the coding unit containing the luma coding block covering (xQg - 1, yQg).

As shown in an example in FIG. 13A and FIG. 13B, the QGs inside one CTU can also use the "buffer-top" to store the QPs so that subsequent QGs inside the CTU can access the QP of the above QGs.

In the process of QP derivation, blocks are scanned in the order as indicated in the figure. For a block, QP of neighbors A and B are used for QP prediction. These QPs of neighbors can be stored in buffers, represented by small squares. The figure in this example is on scale: it represents a CTU at 128x128 luma samples, and the minimal block size is 4x4. That is, needed QP storage granularity is 4 samples, which makes 128/4 = 32 elements for each QP buffer for a CTU. Once the QP of a block (CU) is derived, it can be stored in the buffer(s) taking as many places as width/height of the block, and the process continues to the next block (CUs, then next QG, etc).

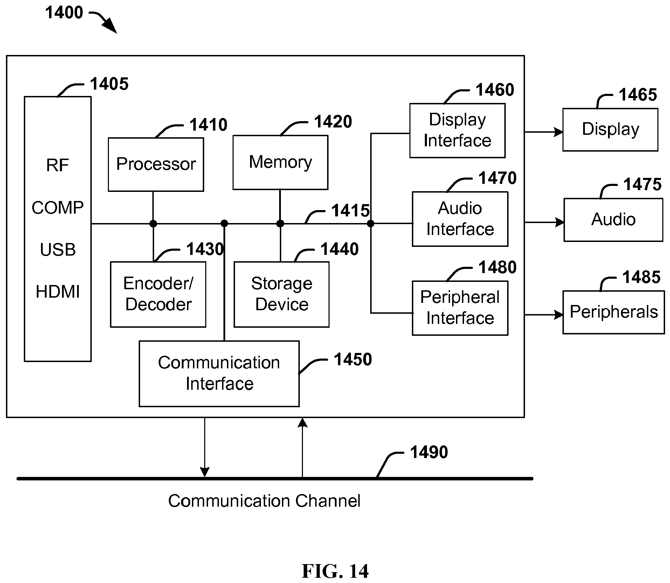

Here, FIG. 13A illustrates the buffers when QG 14 is to be processed, and FIG. 13B illustrates the buffers when QG 18 is to be processed. It can be seen that the storage of QPs overrides the QPs of other blocks in the same positions of the buffers. For example, for the top buffer, between FIG. 14A and FIG. 14B, the QPs for block 5 are replaced by QPs for blocks 16 and 17 in the top-buffer. This is the wavefront-style buffering, which turns 2D storage to two 1D storage buffers.

**Embodiment 4**

For all the embodiments described above, (eq. 2) may be replaced with:

QPpred = (is QPA available) ? QPA : QPB
or QPpred = (is QPB available) ? QPB : QPA

That is, only the left predictor or the top predictor is used to generate the QP predictor.

In another solution, use (eq. 2) when both QPA and QPB are available, and:

if (QPA not available) then QPpred = QPB
if (QPB not available) then QPpred = QPA
if (QPA and QPB are not available) then QPpred = QPprev

where "QPprev" is the QP of the previous QG in the decoding order, and "QPX available" means QG(X) is not outside the picture, or outside the current tile or slice, or outside the current CTU, or outside the current PDVU (Processing Data Virtual Unit). The PDVU is the hardware and/or implementation memory cache constraint/limitation for decoding elementary CU.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the quantization and/or de-quantization modules (130, 140, 240), of a video encoder 100 and decoder 200 as shown in FIG. 1 and FIG. 2. Moreover, the present aspects are not limited to VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application, for example, QG indices and CTU sizes. The specific values are for example purposes and the aspects described are not limited to these specific values.

FIG. 14 illustrates a block diagram of an example of a system in which various aspects and embodiments are implemented. System 1400 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1400, singly or in combination, may be embodied in a single integrated circuit, multiple ICs, and/or discrete components. For example, in at least one embodiment, the processing and encoder/decoder elements of system 1400 are distributed across multiple ICs and/or discrete components. In various embodiments, the system 1400 is communicatively coupled to other systems, or to other electronic devices, via, for example, a communications bus or through dedicated input and/or output ports. In various embodiments, the system 1400 is configured to implement one or more of the aspects described in this application.

The system 1400 includes at least one processor 1410 configured to execute instructions loaded therein for implementing, for example, the various aspects described in this application. Processor 1410 may include embedded memory, input output interface, and various other circuitries as known in the art. The system 1400 includes at least one memory 1420 (e.g., a volatile memory device, and/or a non-volatile memory device). System 1400 includes a storage device 1440, which may include non-volatile memory and/or volatile memory, including, but not limited to, EEPROM, ROM, PROM, RAM, DRAM, SRAM, flash, magnetic disk drive, and/or optical disk drive. The storage device 1440 may include an internal storage device, an attached storage device, and/or a network accessible storage device, as non-limiting examples.

System 1400 includes an encoder/decoder module 1430 configured, for example, to process data to provide an encoded video or decoded video, and the encoder/decoder module 1430 may include its own processor and memory. The encoder/decoder module 1430 represents module(s) that may be included in a device to perform the encoding and/or decoding functions. As is known, a device may include one or both of the encoding and decoding modules. Additionally, encoder/decoder module 1430 may be implemented as a separate element of system 1400 or may be incorporated within processor 1410 as a combination of hardware and software as known to those skilled in the art.

Program code to be loaded onto processor 1410 or encoder/decoder 1430 to perform the various aspects described in this application may be stored in storage device 1440 and subsequently loaded onto memory 1420 for execution by processor 1410. In accordance with various embodiments, one or more of processor 1410, memory 1420, storage device 1440, and encoder/decoder module 1430 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 1410 and/or the encoder/decoder module 1430 is used to store instructions and to provide working memory for processing that is needed during encoding or decoding. In other embodiments, however, a memory external to the processing device (for example, the processing device may be either the processor 1410 or the encoder/decoder module 1430) is used for one or more of these functions. The external memory may be the memory 1420 and/or the storage device 1440, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 1400 may be provided through various input devices as indicated in block 1405. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 1405 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 1400 to other electronic devices across USB and/or HDMI connections. It is to be understood that various aspects of input processing, for example, Reed-Solomon error correction, may be implemented, for example, within a separate input processing IC or within processor 1410 as necessary. Similarly, aspects of USB or HDMI interface processing may be implemented within separate interface ICs or within processor 1410 as necessary. The demodulated, error corrected, and demultiplexed stream is provided to various processing elements, including, for example, processor 1410, and encoder/decoder 1430 operating in combination with the memory and storage elements to process the datastream as necessary for presentation on an output device.

Various elements of system 1400 may be provided within an integrated housing, Within the integrated housing, the various elements may be interconnected and transmit data therebetween using suitable connection arrangement 1415, for example, an internal bus as known in the art, including the I2C bus, wiring, and printed circuit boards.

The system 1400 includes communication interface 1450 that enables communication with other devices via communication channel 1490. The communication interface 1450 may include, but is not limited to, a transceiver configured to transmit and to receive data over communication channel 1490. The communication interface 1450 may include, but is not limited to, a modem or network card and the communication channel 1490 may be implemented, for example, within a wired and/or a wireless medium.

Data is streamed to the system 1400, in various embodiments, using a Wi-Fi network such as IEEE 802.11. The Wi-Fi signal of these embodiments is received over the communications channel 1490 and the communications interface 1450 which are adapted for Wi-Fi communications. The communications channel 1490 of these embodiments is typically connected to an access point or router that provides access to outside networks including the Internet for allowing streaming applications and other over-the-top communications. Other embodiments provide streamed data to the system 1400 using a set-top box that delivers the data over the HDMI connection of the input block 1405. Still other embodiments provide streamed data to the system 1400 using the RF connection of the input block 1405.

The system 1400 may provide an output signal to various output devices, including a display 1465, speakers 1475, and other peripheral devices 1485. The other peripheral devices 1485 include, in various examples of embodiments, one or more of a stand-alone DVR, a disk player, a stereo system, a lighting system, and other devices that provide a function based on the output of the system 1400. In various embodiments, control signals are communicated between the system 1400 and the display 1465, speakers 1475, or other peripheral devices 1485 using signaling such as AV.Link, CEC, or other communications protocols that enable device-to-device control with or without user intervention. The output devices may be communicatively coupled to system 1400 via dedicated connections through respective interfaces 1460, 1470, and 1480. Alternatively, the output devices may be connected to system 1400 using the communications channel 1490 via the communications interface 1450. The display 1465 and speakers 1475 may be integrated in a single unit with the other components of system 1400 in an electronic device, for example, a television. In various embodiments, the display interface 1460 includes a display driver, for example, a timing controller (T Con) chip.

The display 1465 and speaker 1475 may alternatively be separate from one or more of the other components, for example, if the RF portion of input 1405 is part of a separate set-top box. In various embodiments in which the display 1465 and speakers 1475 are external components, the output signal may be provided via dedicated output connections, including, for example, HDMI ports, USB ports, or COMP outputs.

Accordingly, the present embodiments provide methods for generating a quantization parameter (QP) predictor for a current block to be encoded or decoded, based on one or more quantization parameters of neighboring blocks of the current block. The current block can correspond to a coding unit, a quantization group, or another partition unit, and the neighboring blocks can correspond to coding units, quantization groups, or other partition units. Quantization parameters may be encoded or decoded for blocks of different sizes and/or shapes. The difference (QP delta value) between a quantization parameter and the quantization parameter predictor is encoded or decoded for the block.

In one example, a left (top) QP predictor is formed using the QP for a left (top) neighboring block that has the largest common border length with the current block, or the largest surface area. The QP predictor for the block is formed as the left QP predictor, the top QP predictor, or an average of the left and top QP predictors.

In another example, the QP predictor is selected as the QP of a neighboring block that has the greatest shared border length with the current block. If several neighboring blocks have the same greatest shared border length, the QP predictor is selected as the average QP of those neighboring blocks. The average QP may be a weighted average, where the weights may be based on the length of shared borders or surface areas of the neighboring blocks used for predicting the QPs.

In another example, a position within the current block is used to select which neighboring blocks are to be used for predicting QP for the current block. A left (top) neighboring block, which includes a sample that has the same vertical (horizontal) location as the position is used for generating the QP predictor for the current block. Multiple positions within the block may be used, and multiple neighboring blocks are used to generate the QP predictor based on the multiple positions.

To form the QP predictor, a list of QP values may be generated for predicting the QP value for the current block.

In one implementation, QPs for neighboring blocks are stored in one or more buffers, for example, at the CTU level. One buffer, for instance, a 1-D wavefront buffer, is used to store QPs for left neighboring blocks, and another buffer for top neighboring blocks. The neighboring blocks that can be used for predicting the QP for the current block may be limited to be within PDVU (Processing Data Virtual Unit). Alternatively, the QP prediction may be limited to the CTU, or there is no restriction to current CTU for left neighbor (in opposition to HEVC and current VVC draft).

An embodiment provides a computer program comprising instructions which when executed by one or more processors cause the one or more processors to perform the encoding method or decoding method according to any of the embodiments described above. One or more of the present embodiments also provide a computer readable storage medium having stored thereon instructions for encoding or decoding video data according to the methods described above. One or more embodiments also provide a computer readable storage medium having stored thereon a bitstream generated according to the methods described above. One or more embodiments also provide a method and apparatus for transmitting or receiving the bitstream generated according to the methods described above.

The present embodiments may include creating and/or transmitting and/or receiving and/or decoding a bitstream or signal that includes one or more of the described syntax elements, or variations thereof.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method of video encoding or decoding, comprising:

   accessing a center position of a block of a picture;
   selecting one or more of adjacent blocks, said adjacent blocks including (1) an above adjacent block that includes a sample that is at a same horizontal location as said center position of said block and (2) a left adjacent block that includes a sample that is at a same vertical location as said center position of said block;
   accessing one or more quantization parameters of said one or more adjacent blocks, each of said one or more quantization parameters corresponding to a respective one of said one or more adjacent blocks; and
   predicting a quantization parameter for said block based on said one or more quantization parameters.

2. An apparatus for video encoding or decoding, comprising:
   one or more processors, wherein said one or more processors are configured to:

   access a center position of a block of a picture;
   select one or more of adjacent blocks, said adjacent blocks including (1) an above adjacent block that includes a sample that is at a same horizontal location as said center position of said block and (2) a left adjacent block that includes a sample that is at a same vertical location as said center position of said block;
   access one or more quantization parameters of said one or more adjacent blocks, each of said one or more quantization parameters corresponding to a respective one of said one or more adjacent blocks; and
   predict a quantization parameter for said block based on said one or more quantization parameters.

3. The method of claim 1, or the apparatus of claim 2, wherein said center position corresponds to (x0 + w/2, y0 + h/2), wherein (x0, y0) are coordinates of a top-left sample of said block, and w and h are width and height of said block, respectively.

4. The method of claim 1 or 3, further comprising, or the apparatus of claim 2 or 3, wherein said one or more processors are further configured to perform:
   encoding a difference between said predicted quantization parameter and a quantization parameter used to quantize said block.

5. The method of claim 1 or 3, further comprising, or the apparatus of claim 2 or 3, wherein said one or more processors are further configured to perform:
   decoding a quantization parameter for said block based on said predicted quantization parameter, said decoded quantization parameter for de-quantizing said block.

6. The method of any one of claims 1 and 3-5, or the apparatus of any one of claims 2-5, wherein said block is in a first coding tree unit, said block being at the boundary of said first coding tree unit and a second coding tree unit, wherein said prediction of quantization parameter is responsive to a quantization parameter of a boundary block in said second coding tree unit.

7. The method of any one of claims 1 and 3-6, or the apparatus of any one of claims 2-6, wherein said block corresponds to a quantization group or a coding unit.

8. The method of any one of claims 1 and 3-7, or the apparatus of any one of claims 2-7, wherein said prediction of quantization parameter is based only on a quantization parameter of said above adjacent block or only on a quantization parameter of said left adjacent block.

9. The method of any one of claims 1 and 3-7, or the apparatus of any one of claims 2-7, wherein said predicted quantization parameter is based on an average of said one or more quantization parameters.

10. The method of claim 9, or the apparatus of claim 9, wherein said predicted quantization parameter is based on a weighted average of said one or more quantization parameters, and wherein a weight associated with a quantization parameter of an adjacent block is responsive to a length of shared border between said adjacent block and said block.

11. The method of claim 9, or the apparatus of claim 9, wherein said predicted quantization parameter is based on a weighted average of said one or more quantization parameters, and wherein a weight associated with a quantization parameter of an adjacent block is responsive to a surface area of said adjacent block.

12. The method of any one of claims 1 and 3-11, or the apparatus of any one of claims 2-11, wherein another position is accessed in said block of said picture, wherein a second set of adjacent blocks is selected, said second set of adjacent blocks including (1) a second above adjacent block that includes a sample that is at a same horizontal location as said another position in said block and (2) a second left adjacent block that includes a sample that is at a same vertical location as said another position in said block, wherein a second set of quantization parameters of said second set of adjacent blocks are accessed, each quantization parameter in said second set of quantization parameters corresponding to a respective block in said second set of adjacent blocks, and wherein said prediction of quantization parameter for said block is further based on said second set of quantization parameters.

13. The method of any one of claims 1 and 3-12, or the apparatus of any one of claims 2-12, wherein said one or more quantization parameters of adjacent blocks are stored in one or more buffers, and wherein quantization parameters of left adjacent blocks are stored in a 1-D buffer.

14. A computer program product comprising computing instructions for performing the method of any one of claims 1 and 3-13 when executed by one or more processors.

15. A signal comprising encoded video, formed by performing:

accessing a center position of a block of a picture;
selecting one or more of adjacent blocks, said adjacent blocks including (1) an above adjacent block that includes a sample that is at a same horizontal location as said center position of said block and (2) a left adjacent block that includes a sample that is at a same vertical location as said center position of said block;
accessing one or more quantization parameters of said one or more adjacent blocks, each of said one or more quantization parameters corresponding to a respective one of said one or more adjacent blocks; and
predicting a quantization parameter for said block based on said one or more quantization parameters.

**FIG. 1**

EP 3 675 500 A1

200

**230** Entropy Decoding
**235** Partitioning
**240** Inverse Quantization
**250** Inverse Transform
**255**
**270**
**260** Intra Prediction
**265**
**275** Motion Compensation
**280** Reference Picture Buffer
In-loop Filters
**285** Post-decoding processing

**FIG. 2**

CTU

2nd split

one QG

1st split

**FIG. 3**

**FIG. 4**

$qp0 = qpPred + 0$

$qp1 = qpPred + qp\_delta$

**FIG. 5**

**FIG. 6**

FIG. 7

FIG. 8

**FIG. 9**

Shaded area is the intersection of projected CU width with above QGs

Shaded area is the intersection of projected CU height with left QGs

QG width projected vertically onto the above CUs

QG height projected horizontally onto the left CUs

**FIG. 10**

FIG. 11A

FIG. 11B

**FIG. 12**

**FIG. 13A**

**FIG. 13B**

**FIG. 14**

Europäisches
Patentamt

European
Patent Office

Office européen
des brevets

# EUROPEAN SEARCH REPORT

Application Number

EP 18 30 6839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/286403 A1 (NISHITANI MASAYOSHI [JP] ET AL) 25 September 2014 (2014-09-25) | 15 | INV. |
| Y | * abstract * <br> * figures 1, 2, 16, 17 * <br> * paragraphs [0015], [0021], [0165] - [0173], [0268], [0285] - [0290] * | 1-9, 12-14 | H04N19/593 <br> H04N19/463 <br> H04N19/124 <br> H04N19/96 |
| Y | EP 3 399 754 A1 (THOMSON LICENSING [FR]) 7 November 2018 (2018-11-07) <br> * paragraphs [0058] - [0063] * <br> * figures 8a-d * | 1-9, 12-14 | |
| X | US 2009/296808 A1 (REGUNATHAN SHANKAR [US] ET AL) 3 December 2009 (2009-12-03) <br><br> * paragraphs [0110] - [0114], [0124] - [0125], [0130], [0140] - [0141], [0150] * | 1,2,4,5, 7-9, 13-15 | |
| A | BROSS B ET AL: "Versatile Video Coding (Draft 3)", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L1001 20 December 2018 (2018-12-20), XP030200071, Retrieved from the Internet: URL:phenix.int-evry.fr/jvet/doc_end_user/d ocuments/12_Macao/wg11/JVET-L1001-v11.zip [retrieved on 2018-12-20] * section 8.4.1 * | 1-15 | TECHNICAL FIELDS SEARCHED (IPC) <br><br> H04N |

The present search report has been drawn up for all claims

| Place of search | Date of completion of the search | Examiner |
|---|---|---|
| The Hague | 21 June 2019 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 6839

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2019

| Patent document cited in search report | | Publication date | Patent family member(s) | | Publication date |
|---|---|---|---|---|---|
| US 2014286403 | A1 | 25-09-2014 | TW | 201338559 A | 16-09-2013 |
| | | | TW | 201720160 A | 01-06-2017 |
| | | | TW | 201811045 A | 16-03-2018 |
| | | | TW | 201844001 A | 16-12-2018 |
| | | | US | 2014286403 A1 | 25-09-2014 |
| | | | US | 2017230661 A1 | 10-08-2017 |
| | | | US | 2017230662 A1 | 10-08-2017 |
| | | | US | 2017230663 A1 | 10-08-2017 |
| | | | US | 2017230664 A1 | 10-08-2017 |
| EP 3399754 | A1 | 07-11-2018 | EP | 3399754 A1 | 07-11-2018 |
| | | | WO | 2018202558 A1 | 08-11-2018 |
| US 2009296808 | A1 | 03-12-2009 | CN | 102057677 A | 11-05-2011 |
| | | | CN | 103428497 A | 04-12-2013 |
| | | | EP | 2283655 A2 | 16-02-2011 |
| | | | EP | 2770741 A1 | 27-08-2014 |
| | | | EP | 3416382 A1 | 19-12-2018 |
| | | | HK | 1155303 A1 | 07-03-2014 |
| | | | JP | 5706318 B2 | 22-04-2015 |
| | | | JP | 5932719 B2 | 08-06-2016 |
| | | | JP | 2011524130 A | 25-08-2011 |
| | | | JP | 2013225889 A | 31-10-2013 |
| | | | KR | 20110015002 A | 14-02-2011 |
| | | | KR | 20160037244 A | 05-04-2016 |
| | | | MX | 343458 B | 07-11-2016 |
| | | | MX | 356897 B | 19-06-2018 |
| | | | US | 2009296808 A1 | 03-12-2009 |
| | | | US | 2014294070 A1 | 02-10-2014 |
| | | | US | 2015043633 A1 | 12-02-2015 |
| | | | US | 2017111640 A1 | 20-04-2017 |
| | | | WO | 2009158113 A2 | 30-12-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. CHEN ; Y. YE ; S. KIM.** Algorithm description for Versatile Video Coding and Test Model 2 (VTM 2). *JVET-K1002, 11th Meeting,* 10 July 2018

- **Y.W. CHEN et al.** Description of SDR, HDR and 360° video coding technology proposal by Qualcomm and Technicolor - low and high complexity versions. *JVET-J0021, 10th Meeting,* 10 April 2018
- **B. BROSS ; J. CHEN ; S. LIU.** Versatile Video Coding (Draft 3). *JVET-L1001,* October 2018